(19) **Europäisches Patentamt / European Patent Office / Office européen des brevets**

(11) **EP 3 656 460 A1**

(12) # EUROPEAN PATENT APPLICATION
published in accordance with Art. 153(4) EPC

(43) Date of publication:
**27.05.2020 Bulletin 2020/22**

(51) Int Cl.:
**B01D 61/36** (2006.01)

(21) Application number: **18835530.9**

(22) Date of filing: **20.07.2018**

(86) International application number:
**PCT/JP2018/027351**

(87) International publication number:
**WO 2019/017486 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2017 CN 201710601695**

(71) Applicant: **Hitachi Chemical Company, Ltd.
Chiyoda-ku
Tokyo 100-6606 (JP)**

(72) Inventors:
• **IWAMURO, Mitsunori**
  **Tokyo 100-6606 (JP)**
• **MURAKAMI, Yasuharu**
  **Tokyo 100-6606 (JP)**
• **MAKINO, Tatsuya**
  **Tokyo 100-6606 (JP)**

(74) Representative: **Hoffmann Eitle
Patent- und Rechtsanwälte PartmbB
Arabellastraße 30
81925 München (DE)**

(54) **POROUS MEMBRANE FOR MEMBRANE DISTILLATION, MEMBRANE MODULE, AND MEMBRANE DISTILLATION DEVICE**

(57)     An object of the present invention is to provide a porous membrane for membrane distillation excellent in thermal insulation properties. The porous membrane for membrane distillation of the present invention contains aerogel particles.

EP 3 656 460 A1

**Description**

**Technical Field**

The present invention relates to a porous membrane for membrane distillation. The present invention also relates to a membrane module and a membrane distillation device including the porous membrane for membrane distillation.

**Background Art**

An evaporation method and a membrane distillation method are conventionally known as methods for treating water. The former needs water to be heated near its boiling point and consumes energy excessively, while the latter can be performed at a temperature of around 30 to 80°C and the energy consumption is low; however, treatment efficiency thereof needs to be increased.

Membrane distillation is a type of technique for purifying water, and can be applied to desalting of sea water, concentration of fruit juice and alcohol, separation and removal of volatile organic compounds, or the like.

Patent Literature 1 discloses a method for manufacturing a polyvinylidene fluoride (PVDF) membrane. Patent Literature 2 discloses water treatment by a membrane distillation method using a hydrophobic membrane, and specifically discloses a membrane material and its application process.

**Citation List**

**Patent Literature**

Patent Literature 1: Chinese Patent Application Laid-Open No. 101632903
Patent Literature 2: Chinese Patent Application Laid-Open No. 103785303

**Summary of Invention**

**Technical Problem**

A membrane distillation device has, for example, a structure having a sewage unit and a purified water unit separated by a porous membrane. When the membrane distillation device is started, sewage in the sewage unit is heated, the temperature difference generates between the both sides of the porous membrane, and the steam pressure difference is also generated between the both sides of the porous membrane by this temperature difference. Steam (water molecules) produced in the sewage unit passes through the membrane, reaches the purified water unit, is then cooled and condensed in the purified water unit, and becomes purified water. That is, membrane distillation can be considered to purify the sewage using the temperature difference between the sewage unit and the purified water unit as a driving force.

For this reason, it is considered that if the temperature difference between the two units of the membrane distillation device can be efficiently maintained, the efficiency of membrane distillation improves.

It is important to increase the thermal insulation properties of the porous membrane which separates the two units for the maintenance of the temperature difference. However, the thermal insulation properties were insufficient in existing porous membranes for membrane distillation (for example, the polyvinylidene fluoride membrane described in Patent Literature 1), and it was difficult to prevent the thermal conduction from the sewage unit to the purified water unit.

An object of the present invention is to provide a porous membrane for membrane distillation excellent in thermal insulation properties. Another object of the present invention is to provide a membrane module including the above-mentioned porous membrane for membrane distillation, and a membrane distillation device comprising the membrane module, and improve the efficiency of membrane distillation thereby.

**Solution to Problem**

The present disclosure provides a porous membrane for membrane distillation comprising aerogel particles.

In one aspect, a content of the above-mentioned aerogel particles may be 0.05 to 50% by mass.

In one aspect, a content of the above-mentioned aerogel particles may be 3 to 50% by mass.

In one aspect, a thickness of the above-mentioned porous membrane for membrane distillation may be 0.1 mm or more and 1 mm or less.

In one aspect, a thickness of the above-mentioned porous membrane for membrane distillation may be 0.1 mm or more and 0.5 mm or less.

In one aspect, an average particle size of the above-mentioned aerogel particles may be 0.1 to 1000 $\mu$m.

In one aspect, an average particle size of the above-mentioned aerogel particles may be 0.1 to 500 $\mu$m.

In one aspect, the above-mentioned aerogel particles may comprise a hydrolysis condensate of an organosilicon compound having a hydrolyzable group and silica particles.

In one aspect, the above-mentioned hydrolysis condensate may comprise at least one reactive group selected from the group consisting of alkenyl groups, a glycidyl group, an (meth)acryloyl group, a mercapto group, a thioether group, a thioester group and an amidinothio group.

In one aspect, the above-mentioned porous membrane for membrane distillation may comprise a configuration having the above-mentioned aerogel particles dispersed in a polyvinylidene fluoride membrane.

This disclosure also provides a membrane module comprising the above-mentioned porous membrane for membrane distillation.

In one aspect, the above-mentioned membrane module may comprise a layered body having a plurality of porous membranes layered, wherein at least one of the above-mentioned plurality of porous membranes may be the above-mentioned porous membrane for membrane distillation at this time.

The present disclosure further provides a membrane distillation device comprising the above-mentioned membrane module.

## Advantageous Effects of Invention

A porous membrane for membrane distillation of the present invention is excellent in thermal insulation properties and can suppress the thermal conduction between units remarkably, as compared with common porous membranes for membrane distillation. A membrane module including the porous membrane for membrane distillation of the present invention and a membrane distillation device comprising the membrane module can increase the temperature difference between both sides of the membrane efficiently, and thus can perform membrane distillation highly efficiently.

## Description of Embodiments

The present invention will be described by the embodiments and Examples of the present invention in detail hereinafter. However, the present invention is not limited to the following embodiments.

A porous membrane for membrane distillation according to the present embodiment (hereinafter also simply referred to as a porous membrane) is a membrane containing aerogel particles. The porous membrane may be, for example, a porous membrane including a membrane material and aerogel particles dispersed in the membrane material. The porous membrane may a porous membrane in which the aerogel particles are dispersed in a membrane material constituting an existing porous membrane for membrane distillation.

(Aerogel particles)

As compared with a wet gel, a dried gel obtained using a supercritical drying method for is called an aerogel, a dried gel obtained by drying at normal pressure is called a xerogel, and a dried gel obtained by freeze-drying is called a Cryogel in a narrow sense; however, a dried gel having a low density obtained by any of these techniques for drying a wet gel is called an aerogel in the present embodiment. That is, the aerogel means an aerogel in a broad sense, namely a gel comprising a microporous solid the disperse phase of which is gas, in the present embodiment. The inside of the aerogel is generally a reticulate fine structure, and has cluster structures in which primary particles of around 2 to 20 nm bind. Fine pores of less than 100 nm are present between skeletons formed by these clusters, and the clusters and the pores have fine porous structure in three dimensions. It is preferable that the aerogel in the present embodiment is a silica aerogel containing silica as the main component. Examples of the silica aerogel include a so-called silica aerogel in which organic groups such as a methyl group or an organic chain is introduced, and organic and inorganic parts are hybridized.

The aerogel particles in the present embodiment may be powdered aerogel, and can also be called a powdery aerogel. That is, each of the aerogel particles may be a porous body having the above-mentioned cluster structure which is a characteristic of the aerogel.

The aerogel particles may be a complex containing a hydrolysis condensate of an organosilicon compound having a hydrolyzable group and silica particles.

Examples of the hydrolyzable group which the organosilicon compound has include alkoxy groups. It is preferable that the alkoxy groups are alkoxy groups bound to silicon atoms in an organosilicon compound.

Examples of the organosilicon compound having a hydrolyzable group include alkyl silicon alkoxides. An alkyl silicon alkoxide the number of hydrolyzable groups (alkoxy groups) of which is 3 or less is preferable, and an alkyl silicon alkoxide the number of hydrolyzable groups of which is 2 to 3 is more preferable. According to such an alkyl silicon alkoxide, highly hydrophobic polysiloxane skeletons can be easily introduced into aerogel particles. Examples of such an alkyl silicon alkoxide include methyltrimethoxysilane, ethyltrimethoxysilane and dimethyldimethoxysilane.

Examples of the organosilicon compound having a hydrolyzable group also include a compound having 2 or more silicon atoms to which the hydrolyzable group binds (hereinafter also called a polyfunctional compound). The polyfunctional compound, for example, may be a compound having 2 to 12 silicon atoms to which the hydrolyzable group binds, and may be a compound having 2 silicon atoms to which the hydrolyzable group binds. The polyfunctional compound may be a compound in which a plurality of silicon atoms is connected with each other by a hydrocarbon group (for example, an alkanediyl group). In the polyfunctional compound, the number of the hydrolyzable groups binding to each silicon atom is not particularly limited, and may be, for example, 3 or less. Examples of such a polyfunctional compound include bis(trimethoxysilyl)methane, bis(trimethoxysilyl)ethane and bis(trimethoxysilyl)hexane.

Examples of the organosilicon compound having a hydrolyzable group further include polysiloxane compounds, which has siloxane bonds. The polysiloxane compound, for example, may be a compound having 2 or more silicon atoms to which the hydrolyzable group binds, may be a compound having 2 to 12 silicon atoms to which the hydrolyzable group binds, and may be a compound having 2 silicon atoms to which the hydrolyzable group binds. The polysiloxane compound may be a compound having silicon atoms to which the hydrolyzable group binds at both ends of the main chain comprising siloxane bonds. In the polysiloxane compound, the number of the hydrolyzable groups bound to each silicon atom is not particularly limited, and may be, for example, 3 or less. A commercial item may be used as such a polysiloxane compound, and examples thereof include "XF40-C5978" (produced by Momentive Performance Materials Japan Limited Liability Company).

Examples of the organosilicon compound having a hydrolyzable group further include an organosilicon compound having a hydrolyzable group and a reactive group (hereinafter also called a silane coupling agent). The reactive group can be introduced into the above-mentioned hydrolysis condensate using such an organosilicon compound. Examples of the reactive group include an alkenyl group, a glycidyl group, a (meth)acryloyl group, a mercapto group, a thioether group, a thioester group and an amidinothio group. As the reactive group, an alkenyl group having 2 to 20 carbon atoms is preferable. The adhesiveness between the aerogel particles and a membrane material constituting a porous membrane can be increased by introducing the reactive group.

In the present embodiment, the above-mentioned organosilicon compound may be used alone or in combination of two or more.

For example, the organosilicon compound may contain the alkyl silicon alkoxide and the polysiloxane compound. At this time, it is preferable that the content of the alkyl silicon alkoxide based on the organosilicon compound is, for example, 60% by mass or more, and it is more preferable that the content is 70% by mass or more. It is preferable that the content of the alkyl silicon alkoxide based on the organosilicon compound is, for example, 90% by mass or less, and it is more preferable that the content is 80% by mass or less. It is preferable that the content of the polysiloxane compound based on the organosilicon compound is, for example, 5% by mass or more, and it is more preferable that the content is 10% by mass or more. It is preferable that the content of the polysiloxane compound based on the organosilicon compound is, for example, 30% by mass or less, and it is more preferable that the content is 20% by mass or less.

The alkyl silicon alkoxide may contain a first alkyl silicon alkoxide having 2 alkoxy groups and a second alkyl silicon alkoxide having 3 alkoxy groups. The content of the first alkyl silicon alkoxide based on the total amount of the alkyl silicon alkoxide may be, for example, 5 to 50% by mass, and may be 10 to 30% by mass.

In the present embodiment, the aerogel particles contain a hydrolysis condensate of the organosilicon compound, and this hydrolysis condensate may have polyalkylsiloxane skeletons, which are highly hydrophobic. Since the hydrophobicity of such aerogel particles is high, the hydrophobicity of the porous membrane can be further improved.

When the hydrophobicity of the aerogel particles is high, the affinity with a hydrophobic material such as PVDF is high. A large amount of the aerogel particles can be thereby blended into the membrane material, and aerogel particles can be uniformly dispersed in the membrane. Consequently, the thermal insulation effect of the aerogel particles is exhibited more effectively, and the efficiency of membrane distillation can be further improved.

It is preferable that the degree of hydrophobicity of the aerogel particles is 30% or more, and it is more preferable that the degree is 50% or more. With such aerogel particles, the hydrophobicity of the porous membrane can be further improved. For example, the angle of contact of PVDF membranes which are conventionally used for membrane distillation is around 80°, and it is possible that the hydrophobicity is further increased by dispersing such aerogel particles (for example, the angle of contact is 100° or more).

The maximum of the degree of hydrophobicity of the aerogel particles is not particularly limited. The degree of hydrophobicity of the aerogel particles may be, for example, 70% or less.

Examples of the silica particles include, but are not particularly limited to, amorphous silica particles. Examples of the amorphous silica particles include one type or a plurality of types among the group consisting of molten silica particles, fumed silica particles and colloidal silica particles. Among these, fumed silica particles are comparatively excellent in monodispersibility, and the aggregation in a sol is easily suppressed.

The silica particles may be silica particles in which silanol groups existing on the surfaces of the silica particles are unmodified, may be silica particles in which the silanol groups are modified with cationic groups, anionic groups or nonionic groups, or may be silica particles in which the silanol groups are replaced with alkoxy groups.

Examples of the shape of the silica particles include, but are not particularly limited to, a spherical type (for example, a true spherical type), a cocoon type and an association type. When spherical type particles are used as silica particles among these, the aggregation in a sol is easily suppressed.

It is preferable that the average primary particle size of the silica particles is 5 nm or more, it is more preferable that the average primary particle size is 10 nm or more, and it is further preferable that the average primary particle size is 15 nm or more. Moderate strength is easily imparted to the aerogel, and an aerogel which is excellent in shrinkage resistance at the time of drying can be obtained thereby. It is preferable that the average primary particle size of silica particles is 100 nm or less, and it is more preferable that the average primary particle size is 95 nm or less, and it is further preferable that the average primary particle size is 90 nm or less. The solid thermal conduction of the silica particles is easily suppressed, and an aerogel which is further excellent in thermal insulation properties is thereby easily obtained. The average primary particle size of the silica particles is shown as a value measured by laser diffraction and scattering herein.

It is preferable that the average particle size (D50) of the aerogel particles is 10 $\mu$m or more, it is more preferable that the average particle size is 100 $\mu$m or more, and it is further preferable that the average particle size is 200 $\mu$m or more. In this case, since a larger amount of a porous structure of the aerogel is maintained, thermal insulation performance further improves. It is preferable that the average particle size of the aerogel particles is 1000 $\mu$m or less, it is more preferable that the average particle size is 500 $\mu$m or less, and it is further preferable that the average particle size is 300 $\mu$m or less. In this case, the dispersibility in the membrane material improves, and a uniform porous membrane is easily obtained. It is desirable that the particle size of the aerogel particles does not exceed the thickness of a porous membrane to be manufactured so that the aerogel particles do not project from the surface of the porous membrane.

The average particle size (D50) of the aerogel particles is shown as a value measured by laser diffraction and scattering herein. For example, the aerogel particles are specifically added to a solvent (methanol) in the range of a concentration of 0.05 to 5% by mass, and the aerogel particles are dispersed by vibrating with a 50-W ultrasonic homogenizer for 15 to 30 minutes. Then, around 10 mL of the dispersion is injected into a laser diffraction and scattering particle size distribution-measuring device, and the particle size is measured when the refractive index is 1.3, and the absorption is 0 at 25°C. The particle size at an integrated value of 50% (based on volume) in this particle size distribution is defined as an average particle size D50. As the measuring device, for example, Microtrac MT3000 (manufactured by NIKKISO CO., LTD., product name) can be used.

(Method for producing aerogel particles)

Although a method for producing aerogel particles is not particularly limited, the production can be performed, for example, by the following methods.

The method for producing aerogel particles according to the present embodiment comprises: a sol formation step; a wet gel formation step of gelling the sol obtained in the sol formation step to obtain a wet gel; a washing step of washing the wet gel obtained in the wet gel formation step; and a drying step of drying the washed wet gel.

A sol is a state before a gelling reaction occurs, and means a state in which the above-mentioned organosilicon compound and/or its hydrolysis product is dissolved or dispersed in a solvent in the present embodiment. A wet gel means wet gel solid matter containing a liquid medium but not having fluidity.

The steps of the method for producing aerogel particles of the present embodiment will be described hereinafter.

(Sol formation step)

A sol formation step is a step of mixing the above-mentioned organosilicon compound and a solvent and hydrolyzing the mixture to form a sol. In this step, an acid catalyst can be further added to the solvent to promote a hydrolysis reaction. In this step, silica particles may be further added. For example, in this step, the organosilicon compound having a hydrolyzable group, the silica particles and the solvent can be mixed, the above-mentioned hydrolyzable group can be hydrolyzed, and a gel can be formed.

The organosilicon compound may contain an organosilicon compound having a hydrolyzable group and a reactive group (silane coupling agent). At this time, it is desirable that the amount of the silane coupling agent blended is 1.0 to 40.0 parts by mass, it is more desirable that the amount is 5.0 to 35.0 parts by mass, and it is further desirable that the amount is 10.0 to 30.0 parts by mass based on 100 parts by mass of silica particles.

As the solvent, for example, water or a mixed liquid of water and an alcohol can be used. Examples of the alcohol include methanol, ethanol, n-propanol, 2-propanol, n-butanol, 2-butanol and t-butanol. Since the interfacial tension with a gel wall is easily reduced, alcohols wherein the surface tensions are low and the boiling points are low are preferable among these. Example of such alcohols include methanol, ethanol and 2-propanol. The solvent may be used alone or as a mixture of two or more.

Examples of the acid catalyst include inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid and hypochlorous acid; acidic phosphates such as acidic aluminium phosphate, acidic magnesium phosphate and acidic zinc phosphate; and organic carboxylic acids such as acetic acid, formic acid, propionic acid, oxalic acid, malonic acid, succinic acid, citric acid, malic acid, adipic acid and azelaic acid. Among these, examples of the acid catalyst which further improves the water resistance of the obtained aerogel particles include organic carboxylic acids. Although examples of the organic carboxylic acids include acetic acid, the organic carboxylic acids may be formic acid, propionic acid, oxalic acid and malonic acid. These may be used alone or as a mixture of two or more.

The amount of the acid catalyst added can be, for example, 0.001 to 0.1 parts by mass based on 100 parts by mass of the organosilicon compound.

In the sol formation step, a surfactant, a thermally hydrolyzable compound or the like can also be further added.

As the surfactant, a nonionic surfactant, an ionic surfactant or the like can be used. These may be used alone or as a mixture of two or more.

As the nonionic surfactant, for example, a compound containing hydrophilic parts such as polyoxyethylene and hydrophobic parts mainly consisting of alkyl groups, and a compound containing hydrophilic parts such as polyoxypropylene can be used. Examples of the compound containing hydrophilic parts such as polyoxyethylene and hydrophobic parts mainly consisting of alkyl groups include polyoxyethylene nonylphenyl ether, polyoxyethylene octylphenyl ether and polyoxyethylene alkyl ethers. Examples of the compound containing hydrophilic parts such as polyoxypropylene include polyoxypropylene alkyl ethers and a block copolymer of polyoxyethylene and polyoxypropylene.

Examples of the ionic surfactant include cationic surfactants, anionic surfactants and amphoteric surfactants. Examples of the cationic surfactants include cetyltrimethylammonium bromide and cetyltrimethylammonium chloride, and examples of the anionic surfactants include sodium dodecyl sulfonate. Examples of the amphoteric surfactants include amino acid-based surfactants, betaine-based surfactants and amine oxide-based surfactants. Examples of the amino acid-based surfactants include acylglutamic acid. Examples of the betaine-based surfactants include lauryldimethylaminoacetic acid betaine and stearyldimethylaminoacetic acid betaine. Examples of the amine oxide-based surfactants include lauryldimethylamine oxide.

It is considered that, in the below-mentioned wet gel formation step, these surfactants reduce the difference in chemical affinity between a solvent and a growing siloxane polymer in a reaction system, and have the effect of suppressing phase separation.

Although the amount of the surfactant added depends on the type of the surfactant, the type of the organosilicon compound, the amounts of these or the like, the amount is, for example, 1 to 100 parts by mass based on 100 parts by mass of the organosilicon compound. The amount added may be 5 to 60 parts by mass.

It is considered that the thermally hydrolyzable compound generates a base catalyst by thermal hydrolysis, basifies a reaction solution, and promotes a sol-gel reaction in the below-mentioned wet gel formation step. Therefore, the thermally hydrolyzable compound is not particularly limited as long as the thermally hydrolyzable compound is a compound which can basify the reaction solution after hydrolysis, and examples of the thermally hydrolyzable compound include urea; acid amides such as formamide, N-methylformamide, N,N-dimethylformamide, acetamide, N-methylacetamide and N,N-dimethylacetamide; and cyclic nitrogen compounds such as hexamethylenetetramine. Among these, the above-mentioned promotion effect is easily obtained by especially urea.

The amount of the thermally hydrolyzable compound added is not particularly limited as long as the amount is an amount with which the sol-gel reaction in the below-mentioned wet gel formation step is fully promoted. For example, when urea is used as a thermally hydrolyzable compound, the amount added thereof can be 1 to 200 parts by mass based on 100 parts by mass of the organosilicon compound. The amount added may be 2 to 150 parts by mass. Good reactivity is further obtained easily by adjusting the amount added to 1 part by mass or more, and the precipitation of a crystal and a decrease in the density of the gel is further suppressed easily by adjusting the amount added to 200 parts by mass or less.

Although the hydrolysis in the sol formation step depends on the types and the amounts of the organosilicon compound and the acid catalyst in the mixed liquid, the hydrolysis may be performed, for example, under the temperature condition of 20 to 60°C for 10 minutes to 24 hours, or under the temperature condition of 50 to 60°C for 5 minutes to 8 hours. Hydrolyzable groups in the organosilicon compound are fully hydrolyzed, and a hydrolysis product of the organosilicon compound can be obtained more surely thereby.

However, the temperature condition in the sol formation step may be adjusted to a temperature at which the hydrolysis of the thermally hydrolyzable compound is suppressed, and the gelling of the sol is suppressed when the thermally hydrolyzable compound is added to the solvent. As long as the temperature at this time is a temperature at which the hydrolysis of the thermally hydrolyzable compound can be suppressed, the temperature may be any temperature. For example, although the temperature condition in the sol formation step can generally be 0 to 40°C, the temperature condition may further be 10 to 30°C.

(Wet gel formation step)

A wet gel formation step is a step of gelling the sol obtained in the sol formation step and then aging to obtain a wet gel. In this step, although a base catalyst can be used to promote the gelling, a substance used to promote the gelling may not be a base catalyst.

Examples of the base catalyst include alkali metal hydroxides such as lithium hydroxide, sodium hydroxide, potassium hydroxide, cesium hydroxide; alkali carbonates such as sodium carbonate and potassium carbonate; alkali hydrogencarbonates such as sodium hydrogencarbonate and potassium hydrogencarbonate; ammonium compounds such as ammonium hydroxide, ammonium fluoride, ammonium chloride and ammonium bromide; basic sodium phosphates such as sodium metaphosphate, sodium pyrophosphate and sodium polyphosphate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3-(diethylamino)propylamine, di-2-ethylhexylamine, 3-(dibutylamino)propylamine, tetramethylethylenediamine, t-butylamine, sec-butylamine, propylamine, 3-(methylamino)propylamine, 3-(dimethylamino)propylamine, 3-methoxyamine, dimethylethanolamine, methyldiethanolamine, diethanolamine and triethanolamine; and nitrogen-containing heterocyclic compounds such as morpholine, N-methylmorpholine, 2-methylmorpholine, piperazine and a derivative thereof, piperidine and a derivative thereof, and imidazole and a derivative thereof. Among these, ammonium hydroxide (ammonia water) is excellent in that the volatility is high, ammonium hydroxide hardly remains in the aerogel particles after drying, and ammonium hydroxide therefore hardly deteriorates the water resistance and further in economical efficiency. The base catalyst may be used alone or as a mixture of two or more.

Although the amount of the base catalyst added can be, for example, 0.5 to 5 parts by mass based on 100 parts by mass of the organosilicon compound, the amount may be 1 to 4 parts by mass. The gelling can be performed in a shorter time by adjusting the amount to 0.5 parts by mass or more, and a decrease in water resistance can be further suppressed by adjusting the amount to 5 parts by mass or less.

The gelling of the sol in the wet gel formation step may be performed in an airtight container so that the solvent and the base catalyst do not volatilize. Although the gelling temperature can be 30 to 90°C, the gelling temperature may be 40 to 80°C. The gelling can be performed in a shorter time, and a wet gel wherein the strength (rigidity) is higher can be obtained by adjusting the gelling temperature to 30°C or more. Since the volatilization of the solvent (especially alcohols) is easily suppressed by adjusting the gelling temperature to 90°C or less, the gelling can be performed while the volume shrinkage is controlled.

The aging in the wet gel formation step may be performed in an airtight container so that the solvent and the base catalyst do not volatilize. The bonds between components constituting the wet gel are strengthened by aging, so that a wet gel wherein the strength (rigidity) is high enough to suppress the shrinkage at the time of drying can be obtained. Although the aging temperature can be 30 to 90°C, the temperature may be 40 to 80°C. A wet gel wherein the strength (rigidity) is higher can be obtained by adjusting the aging temperature to 30°C or more, the volatilization of the solvent (especially alcohols) is easily suppressed by adjusting the aging temperature to 90°C or less, and the gelling can therefore be performed while the volume shrinkage is suppressed.

Since it is often difficult to distinguish the end of the gelling of the sol, the gelling of the sol and the subsequent aging may be performed by a series of operations continuously.

The gelling time and the aging time are different depending on the gelling temperature and the aging temperature. For example, the gelling time can be shortened when the silica particles are contained in the sol. It is conjectured that it is because a silanol group or a reactive group which the organosilicon compound (or a hydrolysis product thereof) in the sol has forms a hydrogen bond or chemical bond with a silanol group of the silica particles.

Although the gelling time can be 10 to 120 minutes, the time may be 20 to 90 minutes. A homogeneous wet gel is easily obtained by adjusting the gelling time to 10 minutes or more, and the below-mentioned washing step and drying step can be simplified by adjusting the gelling time to 120 minutes or less. Although the total time of the gelling time and the aging time can be 4 to 480 hours as the whole step of gelling and aging, the total time may be 6 to 120 hours. A wet gel wherein the strength (rigidity) is higher can be obtained by adjusting the total of the gelling time and the aging time to 4 hours or more, and the aging effect is more easily maintained by adjusting the total to 480 hours or less.

(Washing step)

A washing step is a step of washing the wet gel obtained by the above-mentioned wet gel formation step (washing step). The washing step may be a step of replacing the solvent in the wet gel while washing the wet gel.

The washing in the washing step can be repeatedly performed, for example, using water or an organic solvent.

At this time, the washing efficiency can be improved by warming.

As the organic solvent, various organic solvents such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid and formic acid can be used. The organic solvent may be used alone or as a mixture of two or more.

The temperature condition in the washing step can be a temperature of the boiling point of the solvent used for washing, or less, and, for example, when methanol is used, warming is performed at around 30 to 60°C.

The wet gel washed in the washing step may be presented to the drying step as it is, or may be presented to the drying step after a solvent replacement step of replacing the solvent in the wet gel with another solvent is performed.

(Drying step)

In a drying step, the wet gel washed as mentioned above is dried. An aerogel can be finally obtained thereby.

The drying technique is not particularly limited, well-known normal pressure drying, supercritical drying or freeze-drying can be used, and among these, normal pressure drying or supercritical drying can however be used from the viewpoint of easily producing an aerogel having a low density. Normal pressure drying can be used from the viewpoint that the production is possible at a low cost. In the present embodiment, normal pressure means 0.1 MPa (atmospheric pressure).

The method for producing aerogel particles of the present embodiment may further comprise an aerogel pulverizing step of pulverizing the aerogel obtained in the drying step to obtain aerogel particles.

The aerogel pulverizing step can be performed, for example, by charging a Henschel mixer with a massive aerogel and operating a mixer at a moderate number of rotations for moderate time. The particle size of the aerogel particles may be adjusted using a mortar, a jet mill, a roller mill, a ball mill, a bead mill or the like if needed.

The method for producing aerogel particles of the present embodiment may further comprise a wet gel pulverizing step of pulverizing the wet gel. In this case, even though the aerogel pulverizing step is not performed, powdery aerogel (aerogel particles) can be obtained.

The wet gel pulverizing step can be performed, for example, by operating a mixer at a moderate number of rotations for moderate time. More simple pulverization of the wet gel can be performed by charging a container which can be closed airtightly with the wet gel or performing the wet gel formation step in a container which can be closed airtightly, and shaking the container for moderate time using a shaking device such as a shaker. The particle size of the wet gel may be adjusted using a mortar, a jet mill, a roller mill, a ball mill, a bead mill or the like if needed.

The method for producing aerogel particles of the present embodiment may further comprise a sieving step of sieving the aerogel particles.

The sieving step is performed to adjust the particle size distribution of the aerogel particles. For example, coarse particles which could not be pulverized (for example, particles having a size of more than 1000 $\mu$m) may remain in the aerogel particles obtained in the pulverizing step, and those coarse particles can be removed in a sieving step. A reticulated sieve comprising wire or fiber and made of metal or resin is preferable as a sieve to be used. The size of the opening diameter of a net can be optionally selected according to the desired particle size. Examples of the opening diameter include 1000 $\mu$m, 500 $\mu$m, 100 $\mu$m, 45 $\mu$m, 18 $\mu$m and 10 $\mu$m.

(Porous membrane for membrane distillation)

A porous membrane may be a porous membrane for membrane distillation which steam can permeate. The porous membrane may be, for example, a porous membrane containing a membrane material and aerogel particles dispersed in the membrane material.

The membrane material may have membrane formability, and it is preferable that the membrane material further have hydrophobicity. Examples of the membrane material include a well-known resin material which can form a hydrophobic porous membrane. Examples of the membrane material include polypropylene (PP), polyacrylonitrile (PAN), and fluororesins such as polytetrafluoroethylene (PTFE) and polyvinylidene fluoride (PVDF). Polyvinylidene fluoride is preferable from the viewpoints of chemical resistance and forming processability.

A method for dispersing aerogel particles in a membrane material is not particularly limited. For example, the membrane material is dissolved in a solvent, the aerogel particles are then dispersed, the mixture is stirred and homogenized, the solvent is then evaporated to dryness, and a porous membrane can be obtained.

Although the thickness of the porous membrane is not particularly limited, the amount of the aerogel particles blended can be increased, and thermal insulation properties can be further improved by thickening the membrane thickness. Since there is a certain atmospheric pressure difference between both sides of the membrane in membrane distillation, certain strength is required for the membrane itself, and required strength is easily obtained by thickening the membrane thickness. Meanwhile, the permeation efficiency of steam tends to improve, and the efficiency of membrane distillation tends to improve by thinning the membrane thickness. It is desirable that the thickness of the porous membrane is 0.1 to 1.0 mm, it is more desirable that the thickness is 0.1 to 0.5 mm, it is further desirable that the thickness is 0.1 mm to 0.4 mm, and it is the most desirable that the thickness is 0.1 to 0.3 mm from these viewpoints.

It is preferable that the content of the aerogel particles in the porous membrane is 0.05 parts by mass or more, it is more preferable that the content is 1 part by mass or more, it is further preferable that the content is 2 parts by mass or more, and it is still more preferable that the content is 3 parts by mass or more. The thermal insulation properties tend to improve further thereby. The content of the aerogel particles in the porous membrane may be, for example, 50 parts by mass or less. The film formability tends to improve, and a uniform porous membrane tends to be easily obtained thereby.

In the present embodiment, a support may be laminated to the porous membrane to increase the membrane strength. The support is not particularly limited as long as the support has adhesiveness to the membrane material, and the steam permeability which is equal to the steam permeability of the porous membrane or more. Examples of the support include a nonwoven fabric of fibers made of a polyester and a nonwoven fabric of fibers made of polypropylene. It is desirable that the thickness of the support is 50 $\mu$m to 300 $\mu$m from the viewpoints of strength and workability.

(Membrane module)

A membrane module according to the present embodiment includes the above-mentioned porous membrane for membrane distillation. The membrane module, for example, may include a layered body in which a plurality of porous membranes is laminated, and at least one of the plurality of porous membranes may be the above-mentioned porous membrane for membrane distillation in this case.

The configuration of the membrane module other than the porous membrane is not particularly limited, and the membrane module may have the same configuration as well-known membrane modules for membrane distillation.

(Membrane distillation device)

A membrane distillation device according to the present embodiment comprises the membrane module including the above-mentioned porous membrane for membrane distillation. The membrane distillation device may comprise a plurality of membrane modules, and at least one of the plurality of membrane modules may be a membrane module including the above-mentioned porous membrane for membrane distillation in this case.

Other configurations of the membrane distillation device are not particularly limited, and the membrane distillation device may have the same configuration as well-known membrane distillation devices.

Although the suitable embodiments of the present invention were described above, the present invention is not limited to the above-mentioned embodiments.

Examples

Although the present disclosure will be described by Examples in more detail hereinafter, the present invention is not limited to the following Examples.

(Example 1)

[Production of aerogel particles]

A 100-mL beaker was charged with 10 g of urea (produced by Wako Pure Chemical Corporation) and 1.6 g of cetyltrimethylammonium bromide (produced by Wako Pure Chemical Corporation, CTAB, surfactant) together with 15 g of a 5 mM acetic acid solution (produced by Wako Pure Chemical Corporation), the mixture was stirred at 40°C for 60 minutes, and urea and CTAB were dissolved completely. The solution was cooled to room temperature to obtain a white solid.

Then, 17 g of colloidal silica (produced by FUSO CHEMICAL CO., LTD., PL-2L, aqueous dispersion of silica nanoparticles [particle size 20 nm$\phi$], 20 parts by mass), 5.8 g of methyltrimethoxysilane (produced by Shin-Etsu Chemical Co., Ltd., MTMS), 2.0 g of an alkoxysiloxane (produced by Momentive Performance Materials Japan Limited Liability Company, XF40-C5978) and 1.7 g of dimethyldimethoxysilane (produced by Shin-Etsu Chemical Co., Ltd., DMDMS) were added, and the mixture was stirred in a heating magnetic stirrer (at a number of rotations of 300 rotations/min) at 24°C for 1 hour to obtain a suspension having low viscosity.

The suspension was poured into a shallow container, and the container was sealed airtightly with a film and heated in an oven set at 60°C for 60 hours. Block-shaped solid matter was taken out of the shallow container, a beaker containing 100 mL of pure water was charged with the solid matter, sealed airtightly with a film and heated in an oven set at 60°C for 3 hours.

Then, the solid matter was taken out, a beaker containing 100 mL of methanol was charged with the solid matter, sealed airtightly with a film and heated in an oven set at 60°C for 3 hours. The methanol treatment was repeated twice.

Then, the solid matter was taken out and dried in a drier set at 40°C for 1 hour to obtain a block-shaped aerogel (around 10g). It was ground with the mortar and sieved using a sieve having an opening diameter of 45 μm to obtain aerogel particles having an average particle size (D50) of 20 μm.

[Manufacturing of porous membrane for membrane distillation]

A 200-mL three-necked flask was charged with 20 g of polyvinylidene fluoride (produced by the Daikin Industries, LTD., PVDF) and 80 g of dimethyl sulfoxide (produced by the Wako Pure Chemical Industries, Ltd., DMSO), the mixture was stirred at 80°C for 12 hours, and polyvinylidene fluoride was dissolved completely. Then, the above-mentioned aerogel particles (around 0.62 g, around 3% by mass of the whole membrane) were added, and the mixture was stirred for 30 minutes to disperse this. Then, the stirring was stopped, the temperature was maintained at 80°C, the mixture was left to stand for around 1 hour until air bubbles disappeared, and a coating liquid was obtained.

A metal plate was coated with 20 g of the coating liquid on a metal plate at normal temperature using a coating tool. When the metal plate to which the coating membrane was attached was placed on another metal plate cooled using ice, the coating membrane became muddy, and became a solid coating membrane. The metal plate to which the coating membrane was attached was immersed in cold water provided separately for 2 to 3 minutes, and the coating membrane was exfoliated from the metal plate. The exfoliated coating membrane was immersed in pure water for 12 hours, the DMSO was removed completely, and the membrane was then dried in the drier set at 40°C for 1 hour to obtain a white porous membrane. The film thickness was 0.5 mm.

(Example 2)

A porous membrane was obtained by the same procedure as in Example 1 except that the amount of the aerogel particles added was changed so that the content of the aerogel particles was 0.05% by mass of the whole membrane.

(Example 3)

A porous membrane was obtained by the same procedure as in Example 1 except that the amount of the aerogel particles added was changed so that the content of the aerogel particles was 20% by mass of the whole membrane.

(Example 4)

A porous membrane was obtained by the same procedure as in Example 1 except that the amount of the aerogel particles added was changed so that the content of the aerogel particles was 50% by mass of the whole membrane.

(Example 5)

A porous membrane was obtained by the same procedure as in Example 1 except that the membrane thickness was 0.1 mm. The aerogel particles were further pulverized and used as particles having an average particle size of 10 μm to adjust the particle size of aerogel particles to the membrane thickness or less.

(Example 6)

A porous membrane was obtained by the same procedure as in Example 1 except that the membrane thickness was 1.0 mm.

(Comparative Example 1)

A porous membrane was obtained by the same procedure as in Example 1 except that the aerogel particles were not added.

(Evaluation method)

[Measurement of thermal conductivity]

The thermal conductivity was measured using a thermal resistance method. A porous membrane obtained in each of Examples and Comparative Example was cut to a size of 10 mm × 10 mm, in the structure of heater / heat transfer rod / platinum temperature-measuring thermal resistor / porous membrane for membrane distillation / platinum temperature-measuring thermal resistor / heat transfer rod / water-cooled plate, spaces between the layers was sealed airtightly using silicone grease (produced by Shin-Etsu Chemical Co., Ltd., X23-7758D), and the evaluation was performed. The temperature difference between the upper and lower surfaces of a sample $\Delta T$ was measured with the input power adjusted to 0.5W and the water temperature adjusted to 25°C, and the thermal conductivity was calculated using the following expressions (1), (2) and (3). The results are shown in Table 1.

$$R = \Delta T/Q \qquad \text{Expression (1)}$$

$$R_S = R - R_O \qquad \text{Expression (2)}$$

$$\lambda = d/R_S \cdot S \qquad \text{Expression (3)}$$

wherein R: measured value of thermal resistance (K/W), $R_O$: thermal resistance at the time of blank measurement, $R_S$: thermal resistance of sample (K/W), $\Delta T$: temperature difference between back and front of sample (K), Q: inputting heat quantity of radiator (W), D: thickness of sample, and S: area of sample ($m^2$).

[Table 1]

| Item | Aerogel particle content [% by mass] | Membrane thickness [mm] | Thermal conductivity [W/mK] |
|---|---|---|---|
| Example 1 | 3 | 0.5 | 0.06 |
| Example 2 | 0.05 | 0.5 | 0.10 |
| Example 3 | 20 | 0.5 | 0.07 |
| Example 4 | 50 | 0.5 | 0.06 |
| Example 5 | 3 | 0.1 | 0.11 |
| Example 6 | 3 | 1 | 0.05 |
| Comparative Example 1 | 0 | 0.6 | 0.12 |

Table 1 shows that the thermal conductivity of the membrane decreases, namely, the thermal insulation properties of the membrane increase by adding the aerogel to the inside of the porous membrane for membrane distillation. Especially when the amount added is 0.05 to 20 parts by mass and the thickness of the membrane is in the range of 0.1 to 1.0 mm, it can be confirmed that the effect is remarkable.

**Claims**

1.   A porous membrane for membrane distillation, comprising: aerogel particles.

2.   The porous membrane for membrane distillation according to claim 1, wherein a content of the aerogel particles is 0.05 to 50% by mass.

3.   The porous membrane for membrane distillation according to claim 2, wherein the content of the aerogel particles is 3 to 50% by mass.

4. The porous membrane for membrane distillation according to any one of claims 1 to 3, wherein a thickness is 0.1 mm or more and 1 mm or less.

5. The porous membrane for membrane distillation according to claim 4, wherein the thickness is 0.1 mm or more and 0.5 mm or less.

6. The porous membrane for membrane distillation according to any one of claims 1 to 5, wherein an average particle size of the aerogel particles is 0.1 to 1000 μm.

7. The porous membrane for membrane distillation according to claim 6, wherein the average particle size of the aerogel particles is 0.1 to 500 μm.

8. The porous membrane for membrane distillation according to any one of claims 1 to 7, wherein the aerogel particles comprise:

   a hydrolysis condensate of an organosilicon compound having a hydrolyzable group; and
   silica particles.

9. The porous membrane for membrane distillation according to claim 8, wherein the hydrolysis condensate comprises: at least one reactive group selected from the group consisting of alkenyl groups, a glycidyl group, an (meth)acryloyl group, a mercapto group, a thioether group, a thioester group and an amidinothio group.

10. The porous membrane for membrane distillation according to any one of claims 1 to 9, comprising: a configuration having the aerogel particles dispersed in a polyvinylidene fluoride membrane.

11. A membrane module, comprising: the porous membrane for membrane distillation according to any one of claims 1 to 10.

12. The membrane module according to claim 11, comprising:

   a layered body having a plurality of porous membranes layered,
   wherein at least one of the plurality of porous membranes is the porous membrane for membrane distillation according to any one of claims 1 to 10.

13. A membrane distillation device, comprising: the membrane module according to claim 11 or 12.

## INTERNATIONAL SEARCH REPORT

| | International application No. |
|---|---|
| | PCT/JP2018/027351 |

### A. CLASSIFICATION OF SUBJECT MATTER
Int.Cl. B01D61/36(2006.01)i

According to International Patent Classification (IPC) or to both national classification and IPC

### B. FIELDS SEARCHED

Minimum documentation searched (classification system followed by classification symbols)
Int.Cl. B01D61/36

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)
JSTPlus/JMEDPlus/JST7580(JDreamIII), Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X<br>Y | LI, Z. H. et al., Effects of thermal efficiency in DCMD and the preparation of membranes with low thermal conductivity, Applied Surface Science, 30 October 2014, vol. 317, pp. 338–349 | 1–7, 10–13<br>8–9 |
| Y | JP 2016-216283 A (HITACHI CHEMICAL COMPANY, LTD.) 22 December 2016, claim 1<br>(Family: none) | 8–9 |
| Y | WO 2017/038781 A1 (HITACHI CHEMICAL COMPANY, LTD.) 09 March 2017, claim 1<br>& TW 201713598 A | 8–9 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.09.2018 | 18.09.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/027351

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 7-185306 A (NICHIAS CORPORATION) 25 July 1995, claims 1-2<br>(Family: none) | 8-9 |

Form PCT/ISA/210 (continuation of second sheet) (January 2015)

14

**EP 3 656 460 A1**

**REFERENCES CITED IN THE DESCRIPTION**

**Patent documents cited in the description**

- CN 101632903
- CN 103785303